# EUROPÄISCHE PATENTANMELDUNG

(11) **EP 3 053 456 A1**
(43) Veröffentlichungstag der Anmeldung: **10.08.2016**
(21) Anmeldenummer: 15000287.1
(22) Anmeldetag: 30.01.2015
(51) Int. Cl.: A23L 7/161, A23L 35/00

(54) **FLEISCHFREIES NAHRUNGSMITTEL UND VERFAHREN ZUR HERSTELLUNG DES NAHRUNGSMITTELS**

(71) Anmelder: Günter Puttkammer Fleischwaren Spezialitäten GmbH, 19205 Gadebusch (DE)
(72) Erfinder: Puttkammer, Lars, 23919 Berkenthin (DE)
(74) Vertreter: Niedmers, Ole

(57) **Zusammenfassung**

Es wird ein Nahrungsmittel und ein Verfahren zur Herstellung eines Nahrungsmittels vorgeschlagen, wobei das Nahrungsmittel ein Gemisch aus Puff-Reis, Zwiebeln und Wasser umfaßt. Die Schritte zur Herstellung eines Nahrungsmittels sind folgende:
a. Dem Puff-Reis wird Wasser zu seiner Aufquellung zugegeben,
b. den Zwiebeln wird Wasser zu ihrer Aufquellung zugegeben,
c. nachfolgend werden der gemäß Herstellungsschritt a. aufgequollene Puff-Reis und die gemäß Herstellungsschritt b. aufgequollenen Zwiebeln miteinander vermischt,
d. anschließend wird das Gemisch aus Puff-Reis und Zwiebeln mittels Verkleinerungsmitteln verkleinert, und
e. schließlich wird das zerkleinerte Gemisch in Gebrauchseinheiten portioniert abgefüllt.

## Beschreibung

Die Erfindung betrifft ein Nahrungsmittel und ein Verfahren zur Herstellung eines Nahrungsmittels.

Weite Bevölkerungskreise haben im Zuge der immer stärkeren Hinwendung zum Verzehr von nichttierischen Lebensmitteln bzw. einer Reduzierung des Anteils tierischer Lebensmittel an der täglichen Ernährung auch ihr Kaufverhalten im Hinblick auf fleischfreie, zumindest aber fleischreduzierte Lebensmittel geändert. Nicht nur ausgesprochene Vegetarier, Veganer und auch sogn. Flexitarier, sondern auch normale Durchschnittsverbraucher, die normalerweise auch Nahrungsmittel auf Fleischbasis zu sich nehmen, folgen der allgemein gesellschaftlich propagierten Anregung, sich gesünder als bisher zu ernähren und auch einige Tage in der Woche oder im Monat kein Fleisch, auch nicht in den verschiedenen Fleischprodukten verarbeitet, zu sich zu nehmen.

Es ist allgemein bekannt und auch wissenschaftlich erforscht und daraus abgeleitete Erkenntnis, daß ein wichtiger Faktor für die Verbraucher, nicht nur die Vegetarier, Veganer und Flexitarier, sondern auch die Personen, die sich entschlossen haben, in bestimmten Intervallen und bestimmte Intervalle lang keine tierische Nahrung zu sich zu nehmen, ist, daß die anstelle der fleischlichen Nahrung zu sich genommene fleischfreie Nahrung ein sowohl äußerlich ästhetisches als auch ein geschmacklich gleichwertiges Erscheinungsbild wie Nahrung auf tierischer Basis haben muß, um die fleischlose Nahrung auch mental als vollwertige aber fleischlose Nahrung anzunehmen. Das ist beispielsweise bei aus Sojabestandteilen bestehendem Fleischersatz, der unter der Bezeichnung "Tofu" bekannt ist, recht gut gelungen und wird von Verbrauchern, die fleischlose Nahrung bevorzugen, in bezug auf seine Konsistenz und sein Aussehen als Fleischersatz akzeptiert und wertgeschätzt.

Bei fleischfreien Wurstwaren in bezug auf Geschmack und Aussehen zu Waren auf Fleischbasis ähnlichen Waren, die beispielsweise als streichfähiger Brotbelag dienen sollen, ist das allerdings sowohl was das Aussehen, als auch den Geschmack und die Benutzungsfähigkeit (Streichfähigkeit) der angebotenen Waren betrifft, bisher nicht gelungen, obwohl der Bedarf vorhanden ist.

Es ist Aufgabe der Erfindung, ein Nahrungsmittel zu schaffen, das fleischfrei sowohl geschmacklich als auch von der Konsistenz der Nahrungsmittelmasse eine fleischmettartige Struktur und ein fleischmettähnliches Aussehen sowie einen fleischmettähnlichen Geschmack hat, so daß der Verbraucher den Eindruck hat, daß es sich um ein handelsübliches Mett, insbesondere Zwiebelmett, das auf bekannte Weise überwiegend aus tierischem Fleisch besteht, handelt.

Gelöst wird die Aufgabe gemäß der Erfindung dadurch, daß das Nahrungsmittel wenigstens ein Gemisch aus Puff-Reis, Zwiebeln sowie Wasser umfaßt.

Der Puff-Reis bildet in dem zwiebelmettähnlichen fleischfreien Nahrungsmittel optisch im wesentlichen den hellen Fettbestandteil von tierischem Zwiebelmett, wohingegen die Zwiebeln, entsprechend klein gewürfelt und mit zur Farbgebung des Nahrungsmittels geeignet, lange erwärmt werden, um den rot/braunen Anteil fleischbasierten Zwiebelmetts zu bilden, wobei der Wasseranteil den Streichfähigkeitsgrad des Nahrungsmittelgemisches bestimmt. Das Wasser hat erfindungsgemäß auch die wichtige Funktion, daß durch die geeignete Zugabe einer Wassermenge zu dem Gemisch der Puff-Reis in dem gewünschten Grad aufquellen kann, um dem Nahrungsmittel die Struktur und die Streichfähigkeit wie Zwiebelmett tierischen Ursprungs zu geben.

Versuchsreihen haben ergeben, daß bei geeignet gewählten Mengen an Gemischbestandteilen pro festgelegtem Volumen ein geschmacklich sehr gutes und optisch wie Zwiebelmett tierischen Ursprungs aussehendes Nahrungsmittel unter Berücksichtigung der erfindungsgemäßen Zusammensetzung des Gemisches bereitgestellt werden kann.

Vorzugsweise wird loser Puff-Reis als Ausgangsteig verwendet. Es kann jedoch für bestimmte Anwendungsfälle vorteilhaft sein, Puff-Reis in Form von Reiswaffeln heranzuziehen, da die Reiswaffeln für das Nahrungsmittel schon für bestimmte Anwendungsfälle eine geeignete Dichte aufweisen, aus der durch entsprechendes Zerkleinern oder Mahlen eine für diese Anwendungsfälle sehr geeignete bröselförmige Struktur des Puff-Reises erreichbar ist. Puff-Reis wird gemäß Definition durch Dämpfen von gequollenem Reis unter Überdruck und plötzlicher Entspannung erzeugt. Puff-Reis ist für diätetische Kost auch als Basisanteil für derart gestützte Waren besonders geeignet. Generell gilt aber, daß gepreßte Reiswaffeln eine ungeeignete Dichte und Vorzerkleinerung aufweisen, welche bei der entsprechenden Weiterverarbeitung/Zerkleinerung zu bröselig bzw. zu fein gemahlen werden.

Bei einer weiteren vorteilhaften Ausgestaltung des Nahrungsmittels umfaßt das Gemisch zusätzlich Tomatenmark, womit einerseits die rötliche Farbe des Nahrungsmittelgemischs dem fleischbasierten Zwiebelmett noch besser angepaßt werden kann und das Tomatenmark hat zusätzlich eine signifikant geschmacksanreichernde Wirkung auf das Nahrungsmittelgemisch.

Wie eingangs erläutert, ist es das Ziel des erfindungsgemäßen Nahrungsmittels, in bezug auf Konsistenz (Streichfähigkeit), Aussehen und Geschmack dem auf tierischem Fleisch basierenden Zwiebelmett so weit wie möglich nahezukommen. Es werden deshalb vorzugsweise die Zwiebeln in einer wärme-pochierten Konsistenz verwendet, so daß diese einerseits weitestgehend keimfrei einen Teil des Nahrungsmittelgemisches bilden und darüber hinaus noch in fertiger Form des Nahrungsmittels dafür sorgen, daß diese eine "Biß" genannte Konsistenz aufweisen, d.h. nicht weichgekocht und auch nicht durch Wärmebehandlung "weichgematscht" sind. Durch die gezielte Wärmebehandlung kann auch ein gewisser Pasteurisierungsgrad der Zwiebeln erreicht werden, so daß die Einleitung eines Gärprozesses in abgefülltem Zustand des Gemisches weitgehend für die Dauer der Lagerfähigkeit des erfindungsgemäßen Nahrungsmittels unter geeigneter Kühlung verhindert werden kann.

Je nach gewollter Geschmacksrichtung des Nahrungsmittelgemisches kann ein weiterer Ausgangsanteil des Nahrungsmittels wenigstens ein nach Art eines Zwiebelmettgewürzes konzipiertes Ingredienz als Teil des Gemisches vorgesehen sein, wobei ein derartiges Zwiebelmettgewürz im Handel bereitgestellt wird.

Ein weiterer Ausgangsanteil des Nahrungsmittels kann gemäß einer anderen vorteilhaften Ausführungsform wenigstens ein in Form eines Säureregulators konzipiertes Ingredienz Teil des Gemisches sein, mit dem die entstehende oder schon im erfindungsgemäßen Nahrungsmittelgemisch bestehende Säure stabilisiert oder gesenkt werden kann, um den gewünschten pH-Wert zu erreichen und die Mindesthaltbarkeit zu gewährleisten.

Wie ebenfalls eingangs schon dargelegt, ist es Ziel des erfindungsgemäßen Nahrungsmittels, nicht nur im Hinblick auf seine Konsistenz dem Zwiebelmett tierischen Ursprungs so nah wie möglich zu kommen, sondern auch in bezug auf das Aussehen und den Geschmack. Gemäß noch einer anderen vorteilhaften Ausgestaltung des Nahrungsmittels ist deshalb als ein weiterer Ausgangsanteil des Nahrungsmittels wenigstens ein in Form eines Farbstoffs konzipiertes Ingredienz Teil des Gemisches, wobei es sich vorzugsweise um den natürlichen Paprika flüssig Farbstoff handelt, der unter dieser Produktbezeichnung im Handel erhältlich ist. Durch Zusatz z.B. dieses Farbstoffs, andere geeignete Farbstoffe sind natürlich ebenfalls denkbar, kann ein tierischen Zwiebelmetts vom Aussehen und vom Geschmack täuschend ähnliches Nahrungsmittel gemäß der Erfindung bereitgestellt werden.

Vorzugsweise eignet sich als weiteres Gewürz im Handel erhältliches Paprikagewürz, das gleichzeitig auch eine sich positiv auf das Aussehen des erfindungsgemäßen Nahrungsmittels ausübende Wirkung als Gewürz zur Geschmacksverbesserung hat.

Es ist auch Aufgabe der Erfindung, ein Verfahren zur Herstellung eines Nahrungsmittels, das wenigstens ein Gemisch aus Puff-Reis, Zwiebeln und Wassern umfaßt, vorzuschlagen, mit dem z.B. ein Nahrungsmittel frei von tierischen Bestandteilen hergestellt werden kann, das wie fleischbasiertes Zwiebelmett handhabbar ist, d.h. streichfähig als Brotbelag verwendbar ist, das ein äußeres Erscheinungsbild wie fleischbasiertes Zwiebelmett aufweist und im Hinblick auf den mit dem Nahrungsmittel erreichbaren Geschmack dem fleischbasierten Zwiebelmett äußerst nahe kommt.

Gelöst wird die Aufgabe gemäß dem erfindungsgemäßen Verfahren durch folgende Herstellungsschritte:
a. Dem Puff-Reis wird Wasser zu seiner Aufquellung zugegeben,
b. Zwiebeln wird Wasser zu ihrer Aufquellung zugegeben,
c. nachfolgend werden der gemäß Herstellungsschritt a. aufgequollene Puff-Reis und die gemäß Herstellungsschritt b. aufgequollenen Zwiebeln miteinander vermischt,
d. anschließend wird das Gemisch aus Puff-Reis und Zwiebeln mittels Verkleinerungsmitteln zerkleinert, und
e. schließlich wird das zerkleinerte Gemisch in Verbrauchseinheiten portioniert abgefüllt.

Die Vermischung und die Zerkleinerung des Gemisches, das das Nahrungsmittel im wesentlichen bildet, erfolgt mit Vorrichtungen wie einem an sich allgemein bekannten Fleischwolf oder einem Cutter, wie er auch in fleisch- und wurstverarbeitenden Betrieben, die u.a. auch Zwiebelmett tierischen Ursprungs herstellen, verwendet wird. Der Grad der Zerkleinerung der Bestandteile des Gemisches und der Grad der Mischung wird auf vorbestimmte Weise festgelegt, da der Abnehmer des erfindungsgemäßen Nahrungsmittels ggf. unterschiedlich feine Varianten und unterschiedliche Größen der einzelnen Bestandteile des Gemisches wünscht.

Im Zuge der Ausführung des Verfahrensschrittes c. können dem entstehenden Gemisch zusätzliche Ingredienzen beigefügt werden, die z.B. die Farbgebung des Nahrungsmittels beeinflussen können, die die geschmackliche Ausrichtung des Nahrungsmittels beeinflussen können und zusätzlich die Haltbarkeit des Nahrungsmittels für einen bedenkenlosen Verzehr erhöhen können.

Wie oben im Zusammenhang mit der Beschreibung des erfindungsgemäßen Nahrungsmittels schon hervorgehoben, sind die Zwiebeln ein Geschmack und Aussehen des Nahrungsmittelprodukts wesentlich bestimmender Anteil, so daß es äußerst vorteilhaft ist, daß zur Vermeidung eines Keimeintrages in das Gemisch, der das Nahrungsmittel ungenießbar macht, als Zwiebeln gemäß Herstellungsschritt b. Trockenzwiebeln verwendet werden, die, bevor sie in das Gemisch gegeben werden, auf Siedetemperatur des Wassers erwärmt werden. Dadurch kann ein das erfindungsgemäße Nahrungsmittel unbrauchbar machender Gärprozeß im Gemisch weitgehend vermieden werden, jedenfalls so lange, wie die Haltbarkeit des erfindungsgemäßen Nahrungsmittels nominell gewährleistet sein soll.

Grundsätzlich kann der Puff-Reis-Anteil des Gemisches, der neben den Zwiebeln einen wesentlich Anteil des Gemisches bildet, aus beliebigen zur Verfügung stehenden Puff-Reis-Konfigurationen bestehen. Es ist jedoch äußerst vorteilhaft für die Ausführung des Verfahrens, daß der Puff-Reis aus losem Puff-Reis als Grundbestandteil des Gemisches besteht. Als Alternative kann auch Puff-Reis aus sogn. Reiswaffeln gewonnen und zur Herstellung des Gemisches verwendet werden, wobei die Reiswaffeln einem weiteren Zerkleinerungsschritt unterworfen werden müssen, bevor sie gemäß Verfahrensschritt a. unter Wasserzugabe aufquellen. Hierbei kann der Grundbestandteil Puff-Reis des Gemisches aber zu bröselig oder zu fein vermahlen werden, was nicht immer von Vorteil ist. Der Vorteil bei der Verwendung von losem Puff-Reis liegt jedoch darin, daß die einzelnen Puff-Reis Partikel eine vorbestimmte und gleichmäßigere Größe aufweisen, mit dem Ziel, daß bei der Zerkleinerung im Zuge der Ausführung des entsprechenden Verfahrensschrittes die Größe der Puff-Reis Partikel dem Aussehen der Fettpartikel bei fleischbasiertem Zwiebelmett besser angepaßt werden kann.

Als Transport- und Darreichungsformen des erfindungsgemäßen Nahrungsmittels eignen sich alle geeigneten Transport- und Verpackungseinheiten, wie sie auch für fleischbasiertes Zwiebelmett Verwendung finden, beispielsweise abgefüllt in Gläser, Dosen, Kunsststoffbecher, Folien aus Kunststoff und dergleichen. Da es aber ein Ziel ist, sich auch in bezug auf die Handhabbarkeit des erfindungsgemäßen Nahrungsmittels der im Handel verwendeten Darreichungsformen fleischbasierten Zwiebelmetts anzugleichen, ist es schließlich vorteilhaft, das zerkleinerte Gemisch gemäß Herstellungsschritt e. in eine in Form eines Darmes aufgebaute Verpackungseinheit einzubringen, wobei ein derartiger Darm dann zur Vermeidung tierischer Bestandteile ein Kunstdarm ist, der mit den allgemein üblichen, bekannten Verschlüssen aus Aluminiumclips oder mittels textiler Werkstoffe verschlossen wird.

Die Grundbestandteile des Nahrungsmittels sind Puff-Reis, Zwiebeln sowie Wasser. Verschiedene Ingredienzen wie Salz, Pfeffer und z.B. Tomatenmark, Gewürze sowie Farbstoffe können dem Nahrungsmittelgemisch zugefügt werden.

Bestimmte Stoffe, beispielsweise Säureregulatoren, können dem Gemisch ebenfalls zugefügt werden, um einen Gärprozeß der zugesetzten Zwiebeln im Nahrungsmittelgemisch nach Fertigstellung und Konfektionierung zu unterbinden, und um den gewünschten stabilen pH-Wert zu erreichen, um das für das Nahrungsmittel angestrebte Mindesthaltbarkeitsziel zu gewährleisten, beispielsweise einen Zeitraum von wenigstens 21 Tagen unter allgemeinen Kühlbedingungen von 5° C in Kühlschränken der Endverbraucher.

Das Nahrungsmittel wird beispielsweise mittels folgender Schritte hergestellt:
a. Puffreis, vorzugsweise in Form von losem Puff-Reis als Ausgangsstoff, wird mit heißem Wasser versetzt, so daß der Puff-Reis aufquellt.
b. Zwiebeln, beispielsweise in Form von Trockenzwiebeln, was sich als vorteilhaft wegen geringerer Keimanfälligkeit und geringerer Anfälligkeit für das unkontrollierte Ingangsetzen eines Gärprozesses des fertigen Nahrungsmittels herausgestellt hat, werden mit Wasser versetzt, so daß diese aufquellen. Die Zwiebeln werden anschließend in einem gesonderten Schritt pasteurisiert.
c. Nachfolgend werden der gemäß Herstellungsschritt a. aufgequollene Puff-Reis und die gemäß Herstellungsschritt b. aufgequollenen Zwiebeln sowie die übrigen Ingredienzen wie Gewürze, Farbstoffe und Säureregulatoren miteinander vermischt, was beispielsweise in einem sogn. Cutter oder in einem nach Art eines Fleischwolfes aufgebauten Apparat erfolgen kann, wobei
d. anschließend das Gemisch mittels Zerkleinerungsmitteln, ebenfalls in Form z.B. eines Cutters oder eines Fleischwolfes, zerkleinert wird, so daß die einzelnen Bestandteile des Nahrungsmittelgemischs eine Größe haben wie sie z.B. als Fleisch- und Fettbestandteile in handelsüblichem Zwiebelmett auf Fleischbasis anzutreffen sind.
e. Schließlich wird das derart aufbereitete Gemisch in Verbrauchseinheiten portioniert abgefüllt. Das Gemisch wird beispielsweise in Dosen, Becher, Gläser oder Kunststoffbehälter abgefüllt, wobei es zur möglichst getreuen Anpassung an im Handel erhältlichen fleischbasierten Zwiebelmetts auch in Därme, beispielsweise Kunstdärme oder Kunststoffdärme abgefüllt und bereitgestellt werden kann.

Im folgenden werden zwei Beispiele aufgeführt, die eine unterschiedliche Rezeptur gemäß dem hier beschriebenen Nahrungsmittel aufweisen.

### Beispiel 1

| | |
|---|---|
| Reiswaffeln (gebröselt) | 100 gr |
| Tomatenmark | 100 gr |
| Zwiebelmett Gewürz (HELA) | 10 gr |
| Salz | 10 gr |
| Zwiebeln gewürfelt (2 min i.d. Mikrowelle) | 100 gr |
| Heißwasser | 300 gr |
| | 620 gr |

Das geschmacklich sehr gute Gemisch hatte ein Aussehen und eine Konsistenz wie fleischbasiertes Zwiebelmett, es hat sich aber herausgestellt, daß das Gemisch innerhalb kürzerer Zeit zur Säurebildung des Gemisches geneigt hat.

### Beispiel 2

| | |
|---|---|
| Reiswaffeln (gebröselt) im Cutter | 100 gr |
| Zwiebelmett Gewürz (HELA) | 10 gr |
| Kochsalz | 10 gr |
| Säureregulator | 9 gr |
| Patonit | 6 gr |
| Zwiebeln pasteurisiert (aus Darm) | 100 gr |
| Heißwasser | 300 gr |
| | 535 gr |

Das geschmacklich sehr gute Nahrungsmittelgemisch hat die Einschränkungen des Gemischs gemäß Beispiel 1 nicht gezeigt und zeigte zudem eine Partikelgröße (Körnung) des Gemisches auf, die im wesentlichen fleischbasierten Zwiebelmetts entspricht.

Im Beispiel 2 war der Puff-Reis noch stärker zerkleinert worden als im Beispiel 1, wobei im Beispiel 2, anders als im Beispiel 1, als Ausgangspunkt für die Zwiebeln des Gemisches Trockenzwiebeln verwendet worden waren. Sowohl im Beispiel 1 als auch im Beispiel 2 waren die Zwiebeln durch Wärmebehandlung geringfügig gebräunt worden, um dem Nahrungsmittelgemisch ein dem fleischbasierten Zwiebelmett sehr ähnliches Aussehen und einen ähnlichen Geschmack zu geben.

## Patentansprüche

1. Nahrungsmittel, umfassend wenigstens ein Gemisch aus Puff-Reis, Zwiebeln sowie Wasser.

2. Nahrungsmittel nach Anspruch 1, **dadurch gekennzeichnet, daß** die Ausgangskonsistenz des Puff-Reises Reiswaffeln sind.

3. Nahrungsmittel nach Anspruch 2, **dadurch gekennzeichnet, daß** der Puff-Reis eine bröselförmige Struktur aufweist.

4. Nahrungsmittel nach einem oder mehreren der Ansprüche 1 bis 3, **dadurch gekennzeichnet, daß** das Gemisch Tomatenmark umfaßt.

5. Nahrungsmittel nach einem oder mehreren der Ansprüche 1 bis 4, **dadurch gekennzeichnet, daß** die Zwiebeln eine wärme-pochierte Konsistenz aufweisen.

6. Nahrungsmittel nach einem oder mehreren der Ansprüche 1 bis 5, **dadurch gekennzeichnet, daß** die Zwiebeln als ein Ausgangsanteil des Nahrungsmittels pasteurisiert sind.

7. Nahrungsmittel nach einem oder mehreren der Ansprüche 1 bis 6, **dadurch gekennzeichnet, daß** als ein weiterer Ausgangsanteil des Nahrungsmittels wenigstens ein nach Art eines Zwiebelmettgewürzes konzipiertes Ingredienz Teil des Gemisches ist.

8. Nahrungsmittel nach einem oder mehreren der Ansprüche 1 bis 7, **dadurch gekennzeichnet, daß** als ein weiterer Ausgangsanteil des Nahrungsmittels wenigstens ein in Form eines Säureregulators konzipiertes Ingredienz Teil des Gemisches ist.

9. Nahrungsmittel nach einem oder mehreren der Ansprüche 1 bis 8, **dadurch gekennzeichnet, daß** als ein weiterer Ausgangsanteil des Nahrungsmittels wenigstens ein in Form eines Farbstoffes konzipiertes Ingredienz Teil des Gemisches ist.

10. Nahrungsmittel nach einem oder mehreren der Ansprüche 1 bis 9, **dadurch gekennzeichnet, daß** ein weiterer Ausgangsanteil des Nahrungsmittels wenigstens ein in Form eines weiteren Gewürzes konzipiertes Ingredienz Teil des Gemisches ist.

11. Nahrungsmittel nach Anspruch 10, **dadurch gekennzeichnet, daß** das Gewürz Paprikagewürz ist.

12. Verfahren zur Herstellung eines Nahrungsmittels, das wenigstens ein Gemisch aus Puff-Reis, Zwiebeln und Wasser umfaßt, **gekennzeichnet durch** folgende Herstellungsschritte:
a. Dem Puffreis wird Wasser zu seiner Aufquellung zugegeben,
b. Zwiebeln wird Wasser zu ihrer Aufquellung zugegeben,
c. nachfolgend werden der gemäß Herstellungsschritt a. aufgequollene Puff-Reis und die gemäß Herstellungsschritt b. aufgequollenen Zwiebeln miteinander vermischt,
d. anschließend wird das Gemisch aus Puff-Reis und Zwiebeln mittels Verkleinerungsmitteln zerkleinert,
e. und schließlich wird das zerkleinerte Gemisch in Ver- brauchseinheiten portioniert abgefüllt.

13. Verfahren nach Anspruch 12, **dadurch gekennzeichnet, daß** im Zuge der Ausführung des Verfahrensschrittes c. dem entstehenden Gemisch zusätzliche Ingredienzen beigefügt werden.

14. Verfahren nach einem oder beiden der Ansprüche 12 oder 13, **dadurch gekennzeichnet, daß** zur Vermeidung eines Keimeintrags in das Gemisch als Zwiebeln gemäß Herstellungsschritt b. Trockenzwiebeln verwendet werden, die auf Siedetemperatur des Wassers erwärmt werden.

15. Verfahren nach einem oder mehreren der Ansprüche 12 bis 14, **dadurch gekennzeichnet, daß** der Puff-Reis aus vorkonfektionierten, aus Puff-Reis bestehenden Reiswaffeln gewonnen wird, wobei die Reiswaffeln in einem Zerkleinerungsschritt bröselförmig zerkleinert werden.

16. Verfahren nach einem oder mehreren der Ansprüche 12 bis 15, **dadurch gekennzeichnet, daß** das zerkleinerte Gemisch gemäß Herstellungsschritt e. in eine in Form eines Darms aufgebaute Verpackungseinheit eingebracht wird.
